# FASCICULE DE BREVET EUROPEEN

(11) **EP 2 107 308 B1**
(45) Date de publication et mention de la délivrance du brevet: **06.09.2017**
(21) Numéro de dépôt: 09155277.8
(22) Date de dépôt: 16.03.2009
(51) Int. Cl.: F23R 3/00, F23R 3/50, F23R 3/60

(54) **Chambre de combustion sectorisée en CMC pour turbine à gaz**
In Sektoren unterteilte CMC-Brennkammer für Gasturbine
Sectorised CMC combustor for a gas turbine

(30) Priorité: 03.04.2008 FR 0852232
(43) Date de publication de la demande: 07.10.2009
(73) Titulaire: Snecma Propulsion Solide, 33187 Le Haillan Cedex (FR)
(72) Inventeur: Habarou, Georges, 33310, Le Bouscat (FR); Camy, Pierre, 33160, Saint Medard en Jalles (FR); Carrere, Benoit, 33320, Le Taillan Medoc (FR); Bouillon, Eric, 33185, Le Haillan (FR)
(74) Mandataire: Delumeau, François Guy

(56) Documents cités:
- EP-A- 0 706 009
- EP-A- 0 943 867
- EP-A- 1 635 118
- EP-A- 1 731 839
- EP-A- 1 801 502
- WO-A-99/48837
- FR-A- 2 871 847
- GB-A- 1 570 875
- GB-A- 2 432 902
- JP-A- 56 059 131

## Description

### Arrière-plan de l'invention

L'invention concerne les turbines à gaz et plus particulièrement la configuration et le montage d'une chambre de combustion annulaire à parois en matériau composite à matrice céramique (CMC). Des domaines d'application de l'invention sont les moteurs aéronautiques à turbine à gaz et les turbines à gaz industrielles.

L'utilisation de CMC pour réaliser des parois de chambre de combustion de turbines à gaz a été proposée en raison des propriétés thermostructurales des CMC, c'est-à-dire leur capacité à conserver de bonnes propriétés mécaniques à des températures élevées. En effet, une température de combustion plus élevée est recherchée pour améliorer le rendement et réduire l'émission d'espèces polluantes en particulier pour des moteurs aéronautiques à turbine à gaz par réduction du débit d'air de refroidissement des parois. La chambre de combustion est montée entre des carters métalliques interne et externe au moyen d'éléments de liaison souples, c'est-à-dire élastiquement déformables, qui permettent d'absorber les différences de variations dimensionnelles d'origine thermique entre parties métalliques et parties en CMC. On pourra se référer en particulier aux documents US 6 708 495, US 7 237 387, US 7 237 388 et US 7 234 306.

Les matériaux CMC sont constitués d'un renfort fibreux réfractaire, par exemple en fibres de carbone ou en fibres céramiques, qui est densifié par une matrice céramique. Pour la réalisation d'une pièce de forme complexe en CMC, on élabore une préforme fibreuse ayant une forme voisine de la pièce à réaliser et on densifie ensuite la préforme. La densification peut être réalisée par voie liquide ou par voie gazeuse ou par une combinaison des deux. La voie liquide consiste à imprégner la préforme par une composition liquide contenant un précurseur de la matrice céramique à réaliser, le précurseur étant typiquement une résine en solution, puis à réaliser un traitement thermique de pyrolyse après réticulation. La voie gazeuse est l'infiltration chimique en phase gazeuse ou CVI (« Chemical Vapor Infiltration ») qui consiste à placer la préforme dans un four dans lequel est introduite une phase gazeuse réactionnelle qui diffuse au sein de la préforme et, dans des conditions prédéterminées notamment de température et de pression, forme un dépôt céramique solide sur les fibres par décomposition d'un précurseur de céramique contenu dans la phase gazeuse ou par réaction entre constituants de celle-ci.

Quel que soit le processus de densification utilisé, un outillage de maintien de la préforme dans la forme désirée est nécessaire, au moins pendant une première phase de densification pour consolidation de la préforme.

La réalisation de parois de chambre de combustion de turbine à gaz requiert des outillages de forme complexe. En outre, dans le cas d'une densification par CVI, les préformes peuvent occuper un espace important d'un four de densification et une optimisation du chargement d'un four est hautement souhaitable.

Le document EP 1 635 118 propose la réalisation d'une paroi de chambre exposée à des gaz chauds au moyen de tuiles en CMC qui sont supportées par une structure de support espacée de la paroi de chambre. Les tuiles sont formées avec des pattes qui s'étendent dans l'espace entre la paroi de chambre et la structure de support et à travers la structure de support pour être reliées à celle-ci du côté extérieur. Les liaisons sont rigides et occupent un volume significatif à l'extérieur de la structure de support. De plus, la réalisation de l'étanchéité nécessite la présence d'un carter supplémentaire.

Le document GB 1 570 875 montre une chambre de combustion annulaire en matériau céramique divisée circonférentiellement en secteurs intégrant chacun un secteur de paroi interne, un secteur de paroi externe et un secteur de fond de chambre les reliant. La chambre de combustion est supportée radialement par des éléments élastiques fixés à un carter métallique externe et s'appuyant simplement sur les faces externes des secteurs de chambre et est en appui axial contre d'autres éléments élastiques. Un maintien des secteurs dans une même position axiale n'est pas garanti par un tel montage, en particulier lorsque les contraintes appliquées sont élevées, comme c'est le cas pour des chambres de combustion de turbines aéronautiques.

### Objet et résumé de l'invention

L'invention a pour objet de remédier aux inconvénients précités et propose à cet effet un ensemble de chambre de combustion annulaire de turbine à gaz, comportant : un carter métallique interne ; un carter métallique externe ; une chambre de combustion annulaire montée entre les carters interne et externe et comprenant une paroi interne annulaire et une paroi externe annulaire en matériau céramique et un fond de chambre raccordé aux parois interne et externe et muni d'orifices pour le logement d'injecteurs ; et des pièces élastiquement déformables supportant la chambre de combustion entre le carter métallique interne et le carter métallique externe, l'ensemble formé par la paroi interne, la paroi externe et le fond de la chambre de combustion étant divisé circonférentiellement en secteurs de chambre adjacents comprenant chacun un secteur de paroi interne, un secteur de paroi externe et un secteur de fond de chambre raccordant les secteurs de parois interne et externe,
ensemble dans lequel chaque secteur de chambre est réalisé en une seule pièce en matériau composite à matrice céramique, des pièces de liaison élastiquement déformables relient le carter métallique interne et le carter métallique externe respectivement à chaque secteur de paroi interne de la chambre de combustion et à chaque secteur de paroi externe de la chambre, et il est prévu une couronne en une seule pièce en contact avec les secteurs de fond de chambre et à laquelle les secteurs de chambre sont reliés.

La division de la chambre de combustion en secteurs permet de limiter les dimensions et la complexité de forme des pièces à réaliser, donc de diminuer sensiblement le coût de fabrication tout en intégrant le fond de chambre avec les parois interne et externe. Par ailleurs, les variations dimensionnelles différentielles entre des carters métalliques et les parois de chambre de combustion en CMC peuvent être aisément et efficacement absorbées par la déformation élastique des éléments de liaison disposés dans l'intervalle entre les parois interne et externe de chambre et les carters métalliques où ils sont baignés par le flux d'air de contournement de la chambre. Les éléments de liaison contribuent en outre au maintien mutuel des secteurs de chambre notamment en direction axiale.

En outre, les secteurs de chambre sont maintenus ensemble à l'extrémité amont de la chambre par une couronne en une seule pièce.

La liaison entre les secteurs de chambre et la couronne peut être réalisée par l'intermédiaire de bols d'injecteurs. La couronne peut en outre porter des casquettes annulaires interne et externe situées dans le prolongement vers l'amont des parois interne et externe de la chambre de combustion.

Chaque pièce de liaison a avantageusement une première extrémité fixée au carter métallique interne ou externe et une deuxième extrémité fixée à un secteur de paroi interne ou externe de la chambre de combustion. Chaque secteur de paroi interne ou de paroi externe de chambre de combustion peut porter au moins une patte sur laquelle est fixée la deuxième extrémité d'une pièce de liaison. Avantageusement, chaque patte d'un secteur de paroi interne ou externe de chambre de combustion est en matériau composite à matrice céramique et est intégrée au secteur à la fabrication de celui-ci. La patte comporte alors un renfort fibreux qui peut être dans la continuité d'un renfort fibreux du secteur de paroi interne ou externe ou qui peut être relié à ce dernier renfort fibreux.

De préférence, un joint d'étanchéité est interposé entre secteurs de chambre adjacents. Le joint d'étanchéité peut comporter une structure fibreuse en fibres réfractaires, laquelle structure fibreuse peut éventuellement être au moins partiellement densifiée par une matrice céramique.

Des lèvres d'étanchéité annulaires interne et externe peuvent être fixées à la partie d'extrémité aval de la chambre, du côté extérieur des parois interne et externe de la chambre, pour réaliser l'étanchéité de l'interface entre la chambre et un distributeur de turbine. Les lèvres d'étanchéité sont avantageusement fixées sur des pattes portées par les secteurs de paroi interne et de paroi externe et servant à la fixation de parties d'extrémité des pièces de liaison avec les carters métalliques.

Selon un mode particulier de réalisation, les secteurs de parois de chambre interne et externe se prolongent par des parties d'extrémité qui sont fixées sur les faces extérieures de parois interne et externe d'un distributeur de turbine disposé en sortie de la chambre de combustion.

L'invention vise aussi un moteur aéronautique à turbine à gaz muni d'un ensemble de chambre de combustion tel que défini ci-avant.

### Brève description des dessins

L'invention sera mieux comprise à la lecture de la description faite ci-après, à titre indicatif mais non limitatif, en référence aux dessins annexés sur lesquels :
- la figure 1 montre de façon très schématique un moteur d'avion à turbine à gaz ;
- la figure 2 est une vue très schématique en coupe avec un détail à échelle agrandie montrant une chambre de combustion et son environnement dans un moteur à turbine à gaz tel que, par exemple, celui de la figure 1, selon un mode de réalisation de l'invention ;
- la figure 3 est une vue en perspective et partiellement arrachée montrant, depuis l'aval, l'ensemble de chambre de combustion de la figure 2 ;
- la figure 4 est une vue en perspective partielle montrant, à échelle agrandie, une partie de l'ensemble de la chambre de combustion de la figure 3 ;
- la figure 5 est une vue similaire à celle de la figure 3 montrant une variante de réalisation de l'invention ; et
- la figure 6 est une vue en perspective d'un détail de l'ensemble de chambre de combustion de la figure 5.

### Description détaillée d'un mode de réalisation

Des modes de réalisation de l'invention seront décrits ci-après dans le cadre de son application à un moteur d'avion à turbine à gaz. L'invention est toutefois applicable à des chambres de combustion de turbines à gaz pour d'autres moteurs aéronautiques ou pour des turbines industrielles.

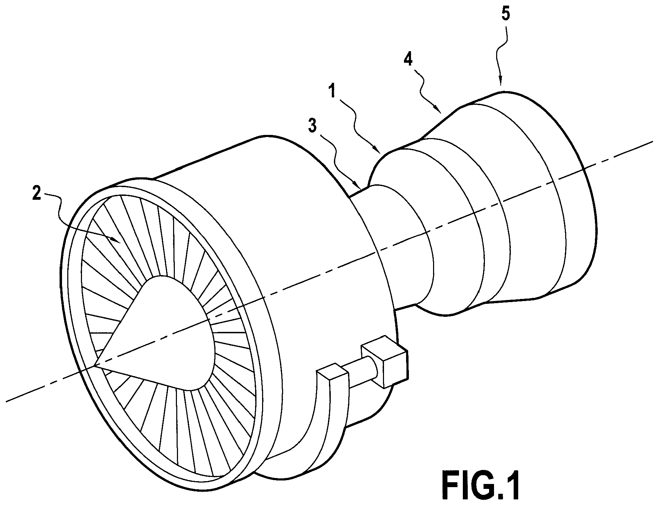

La figure 1 montre très schématiquement un moteur d'avion à turbine à gaz à deux corps comprenant, de l'amont vers l'aval, dans le sens d'écoulement de flux gazeux, une soufflante 2, un compresseur haute pression (HP) 3, une chambre de combustion 1, une turbine haute pression (HP) 4 et une turbine basse pression (BP) 5, les turbines HP et BP étant reliées au compresseur HP et à la soufflante par des arbres respectifs.

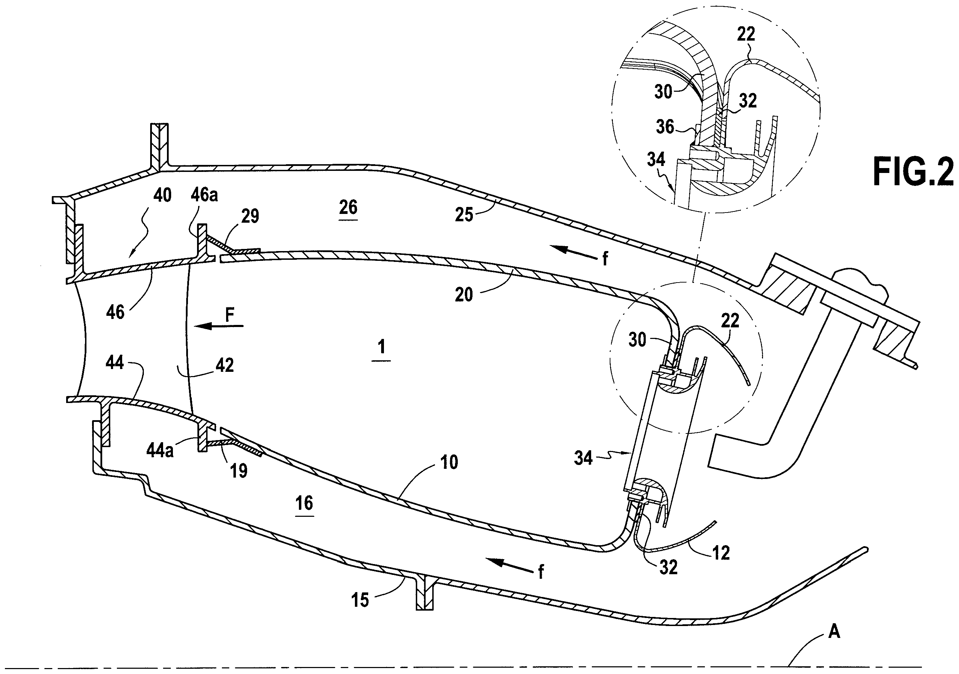

Comme le montre très schématiquement la figure 2, la chambre de combustion 1 est de forme annulaire d'axe A et est délimitée par une paroi annulaire interne 10, une paroi annulaire externe 20 et un fond de chambre 30. Le fond 30, qui délimite l'extrémité amont de la chambre de combustion, présente des ouvertures réparties autour de l'axe A pour le logement d'injecteurs permettant l'injection de carburant et d'air dans la chambre de combustion. Au-delà du fond 30, des casquettes annulaires interne 12 et externe 22 sont situées dans le prolongement des parois interne 10 et externe 20, respectivement, les casquettes contribuant à la canalisation d'air de contournement de la chambre de combustion.

A l'extrémité aval de la chambre de combustion, la sortie de la chambre se raccorde avec l'entrée d'un distributeur de turbine HP 40 qui constitue l'étage d'entrée de la turbine HP. Le distributeur 40 comporte une pluralité d'aubes fixes 42 en matériau métallique ou composite réparties angulairement autour de l'axe A. Les aubes 42 sont solidaires à leurs extrémités radiales de parois ou plates-formes respectivement interne 44 et externe 46 également en matériau métallique ou composite dont les faces intérieures définissent la veine d'écoulement dans le distributeur du flux gazeux issu de la chambre de combustion (flèche F).

A l'interface entre la chambre de combustion et le distributeur 40, l'étanchéité est assurée par des lèvres annulaires interne 19 et externe 29 qui sont fixées sur les faces extérieures des parois 10, 20 et s'appuient à leur extrémité sur des brides annulaires 44a, 46a solidaires des parois 44, 46.

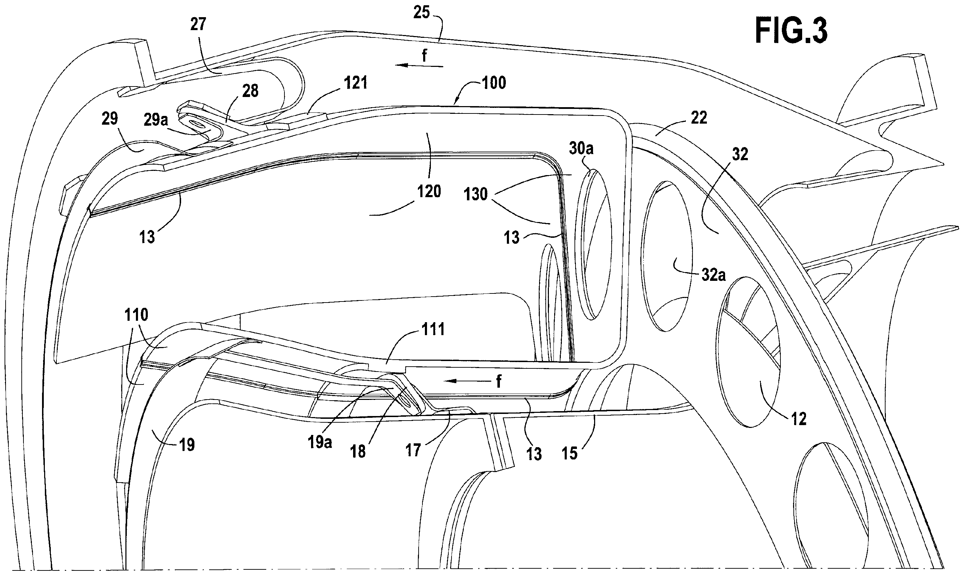

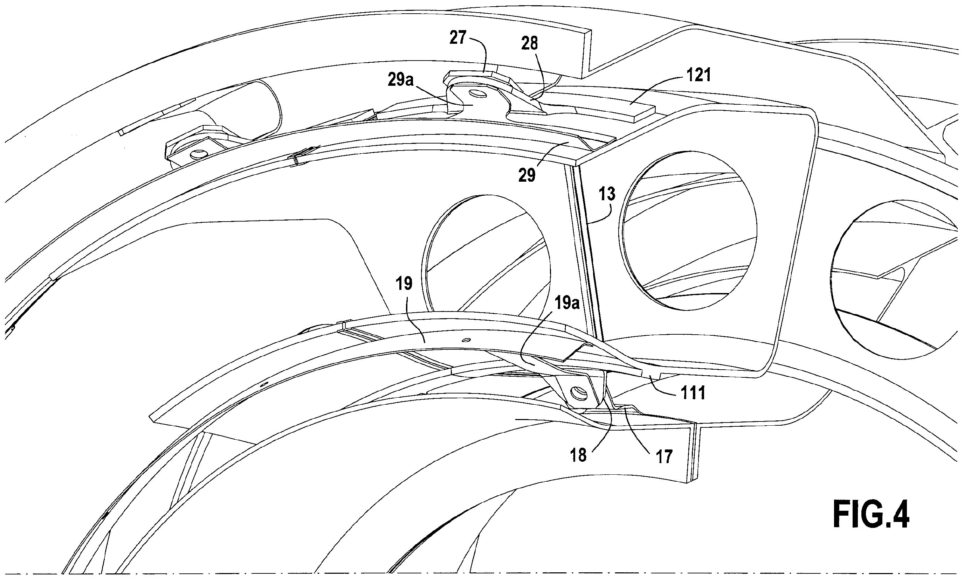

Comme le montrent les figures 3 et 4, la chambre de combustion est divisée circonférentiellement en secteurs de chambre adjacents 100 entre lesquels sont logés des joints d'étanchéité 13. Chaque secteur de chambre est réalisé en une seule pièce en matériau composite à matrice céramique (CMC) et comprend un secteur 110 de paroi interne, un secteur 120 de paroi interne et un secteur 130 de fond de chambre reliant les secteurs 110 et 120. Le nombre de secteurs 100 formant l'intégralité de la chambre de combustion dépend de la capacité d'intégrer plusieurs logements d'injecteurs lors de la fabrication d'un secteur et du nombre total d'injecteurs. Pour des raisons touchant à la maintenance et à réparabilité de la chambre, chaque secteur pourra intégrer par exemple un, deux ou trois logements d'injecteurs. Dans l'exemple illustré, le nombre de secteurs est égal à celui des injecteurs, chaque secteur 100 comprenant une ouverture 30a située au milieu du secteur de fond 130.

La chambre de combustion est supportée entre un carter métallique interne 15 et un carter métallique externe 25 au moyen d'éléments de liaison élastiquement déformables 17, 27. Les éléments de liaison 17 relient le carter métallique 15 à la paroi 10 et les éléments de liaison 27 relient le carter métallique 25 à la paroi 20. Les éléments de liaison 17, 27 s'étendent dans les espaces 16, 26 entre le carter 15 et la paroi 10 et entre le carter 25 et la paroi 20, lesquels espaces sont parcourus par le flux d'air de refroidissement (flèches f) contournant la chambre de combustion. La souplesse des éléments de liaison, qui sont avantageusement métalliques, mais peuvent aussi être en CMC, permet d'absorber les différences de variations dimensionnelles d'origine thermique entre les parois de chambre en CMC et les carters métalliques.

Chaque secteur de chambre est relié aux parois 10 et 20 par respectivement au moins un élément de liaison 17 et au moins un élément de liaison 27. Dans l'exemple illustré, un seul élément de liaison 17 est associé à chaque secteur de chambre 100, l'élément 17 étant sous forme d'une lame métallique repliée en U ayant une extrémité fixée à une patte 18 située du côté extérieur du secteur de paroi 110 et son autre extrémité fixée au carter métallique 15. La fixation des extrémités des éléments de liaison 17 sur les pattes 18 et le carter 15 peut être réalisée par boulonnage, vissage ou rivetage.

De façon similaire, dans l'exemple illustré, un seul élément de liaison 27 est associé à chaque secteur de chambre 100, l'élément 27 étant sous forme d'une lame métallique pliée en U ayant une extrémité fixée à une patte 28 située du côté extérieur du secteur de paroi 120 et son autre extrémité fixée au carter métallique 25. La fixation des extrémités des éléments de liaison 27 sur les pattes 28 et le carter 25 peut être réalisée par boulonnage, vissage ou rivetage.

Les éléments de liaison 17, de même que les éléments de liaison 27 sont disposés en une rangée circonférentielle. Les éléments de liaison 17, 27 contribuent aussi au maintien mutuel des secteurs de chambre 100.

A l'amont de la chambre de combustion, les secteurs de chambre sont maintenus mutuellement par fixation des secteurs de fond 130 sur une couronne 32 par exemple métallique qui présente des ouvertures 32a correspondant aux ouvertures 30a. La fixation sur la couronne 32 peut être réalisée par le montage des bols 34 des injecteurs à travers les ouvertures 30a, 32a, comme montré seulement sur la figure 2, ce type de montage dans des ouvertures de fond de chambre étant bien connu. Chaque injecteur présente un rebord qui vient en appui sur la couronne 32 et, du côté intérieur du fond de chambre, est fixé à sa périphérie par soudage sur une bague 36. La fixation des secteurs de fond 130 sur la couronne 32 pourrait en variante être réalisée par vissage ou boulonnage.

Les casquettes 12, 22, qui peuvent être métalliques, peuvent être fixées sur des brides annulaires interne et externe de la couronne 32, la fixation étant réalisée par exemple par vissage ou boulonnage. En variante, l'une des casquettes 12, 22 pourrait être réalisée en une seule pièce avec la couronne 32.

Les lèvres d'étanchéité 19, 29 portent des pattes de fixation 19a, 29a qui sont avantageusement fixées sur les secteurs de paroi 110, 120 par liaison mécanique avec les pattes 18, 28, celles-ci servant ainsi à la fois à la fixation des éléments de liaison 17, 27 et à la fixation des lèvres 19, 29. Bien entendu, les lèvres d'étanchéité pourraient être fixées d'une autre manière sur les secteurs de paroi 110, 120, par exemple en étant reliées à des pattes ou autres organes d'accrochage solidaires des secteurs de paroi et distincts des pattes 18, 28.

Les pattes 18, 28 sont en CMC et peuvent être fixées sur les secteurs de paroi 110, 120 par brasage ou être intégrées aux secteurs 100 au stade de la fabrication de ceux-ci.

Les secteurs 100 sont en CMC ayant un renfort fibreux densifié par une matrice céramique. Les fibres du renfort fibreux peuvent être en carbone ou céramique et une interphase par exemple en carbone pyrolytique (PyC) ou en nitrure de bore (BN) peut être interposée entre les fibres du renfort et la matrice céramique. Le renfort fibreux peut être réalisé par superposition de strates fibreuses telles que des tissus ou des nappes ou par tissage tridimensionnel. La matrice céramique peut être en carbure de silicium ou autre carbure, nitrure ou oxyde céramique et peut aussi comprendre une ou plusieurs phases de matrice autocicatrisante, c'est-à-dire capables de cicatriser des fissures par passage à l'état pâteux à une certaine température. Des matériaux CMC à matrice autocicatrisante sont décrits notamment dans les brevets US 5 965 266, US 6 291 058 et US 6 068 930.

L'interphase peut être déposée sur les fibres du renfort par CVI. Pour la densification par la matrice céramique, on peut mettre en oeuvre un processus de densification par CVI ou par voie liquide ou encore par voie réactive (imprégnation par un métal fondu). On pourra en particulier effectuer une première phase de densification pour consolidation du renfort fibreux en le maintenant dans la forme désirée au moyen d'un outillage, la densification étant ensuite poursuivie sans outillage de maintien. Les processus d'élaboration de pièces en CMC sont bien connus.

L'intégration des pattes 18, 28 peut être effectuée au stade de l'élaboration du renfort fibreux en réalisant une déliaison locale du renfort, une continuité existant alors entre le renfort fibreux des pattes et celui des secteurs de chambre. Une surépaisseur locale du renfort peut alors être nécessaire, qui se traduit par une surépaisseur 111, 121 de la paroi des secteurs 110, 120 comme montré sur les figures 3 et 4. Cette surépaisseur peut être partiellement éliminée par usinage dans les intervalles entre les pattes 18, 28.

En variante, les renforts fibreux des pattes 18, 28 peuvent être rapportés sur les renforts fibreux des secteurs de chambre par exemple par couture ou autre procédé textile d'implantation de fibres, avant densification.

Les joints d'étanchéité 13 sont interposés entre les bords longitudinaux en regard des secteurs de chambre. Ils ont par exemple une section en forme de X. Les joints 13 peuvent être réalisés sous forme de structure fibreuse en fibres réfractaires. On peut utiliser une structure fibreuse non densifiée formée de fibres en céramique, par exemple de fibres en carbure de silicium ou autre carbure, nitrure ou oxyde céramique, la structure fibreuse étant obtenue par exemple par tissage ou par tressage. On peut aussi utiliser une structure fibreuse en fibres réfractaires (carbone ou céramique) au moins partiellement densifiée par une matrice céramique obtenue par CVI ou par voie liquide.

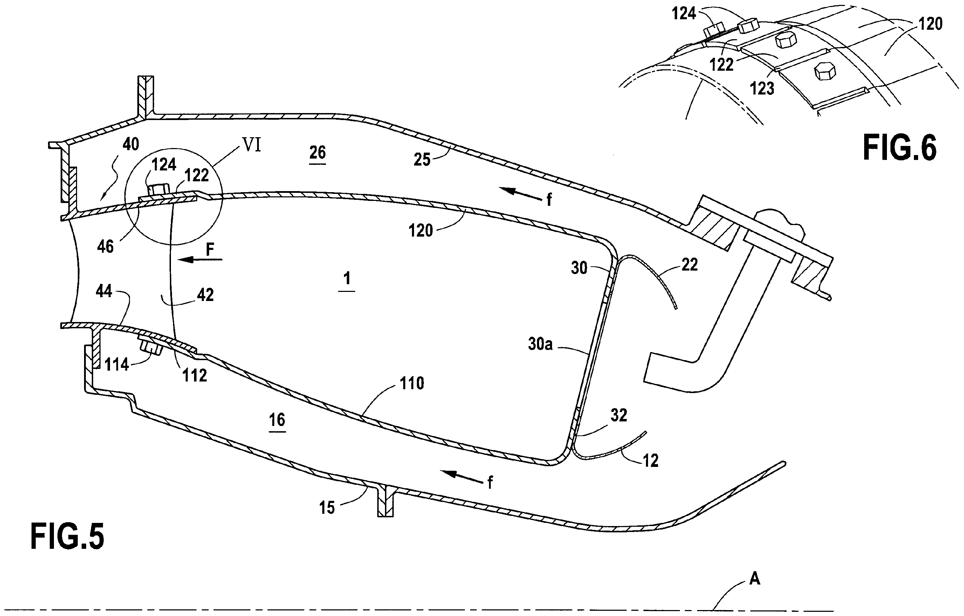

Les figures 5 et 6 illustrent une variante de réalisation de la liaison entre la chambre de combustion et le distributeur de turbine HP 40.

Les secteurs de paroi externe 120 se prolongent vers l'aval par des parties d'extrémité 122 qui viennent couvrir la face extérieure de la paroi annulaire interne 46 du distributeur 40. La liaison entre les parties d'extrémité 122 et le distributeur 40 est réalisée par des vis 124 qui traversent des orifices formés dans les parties d'extrémité 122 et se vissent dans des trous borgnes (par exemple) taraudés, formés dans la paroi 46 et les aubes 42. La liaison pourrait aussi être réalisée par boulonnage au moyen de boulons portés par la paroi 46 et traversant les parties d'extrémité 122. Les parties d'extrémité 122 ont une largeur réduite par rapport au reste des secteurs de paroi 120 afin de ménager un intervalle 123 entre parties d'extrémité 122 voisines et permettre ainsi une variation dimensionnelle différentielle entre les parties d'extrémité en CMC et la paroi métallique 46 du distributeur.

De façon similaire, les secteurs de paroi interne 110 se prolongent vers l'aval par des parties d'extrémité 112 de largeur réduite qui viennent couvrir la face extérieure de la paroi annulaire externe 44 du distributeur 40. Les parties d'extrémités 112 sont reliées au distributeur par des vis 114 ou par boulonnage, de la même façon que les parties d'extrémité 122.

## Revendications

1. Ensemble de chambre de combustion annulaire de turbine à gaz, comportant : un carter métallique interne (15) ; un carter métallique externe (25) ; une chambre de combustion annulaire montée entre les carters interne et externe et comprenant une paroi interne annulaire (10) et une paroi externe annulaire (20) en matériau céramique et un fond de chambre (30) raccordé aux parois interne et externe et muni d'orifices pour le logement d'injecteurs ; et des pièces (17, 27) élastiquement déformables supportant la chambre de combustion entre le carter métallique interne et le carter métallique externe ; l'ensemble formé par la paroi interne (10), la paroi externe (20) et le fond (30) de la chambre de combustion étant divisé circonférentiellement en secteurs de chambre adjacents (100) comprenant chacun un secteur (110) de paroi interne, un secteur (120) de paroi externe et un secteur (130) de fond de chambre raccordant les secteurs de parois interne et externe ;
**caractérisé en ce que** chaque secteur de chambre (100) est réalisé en une seule pièce en matériau composite à matrice céramique, **en ce que** des pièces de liaison (17, 27) élastiquement déformables relient le carter métallique interne (15) et le carter métallique externe (25) respectivement à chaque secteur (110) de paroi interne de la chambre de combustion et à chaque secteur (120) de paroi externe de la chambre, et **en ce qu'**il est prévu en outre une couronne (32) en une seule pièce en contact avec les secteurs (130) de fond de chambre et à laquelle les secteurs de chambre sont reliés.

2. Ensemble selon la revendication 1, **caractérisé en ce que** la liaison entre les secteurs (100) de chambre et la couronne (32) est réalisée par l'intermédiaire de bols d'injecteurs (34).

3. Ensemble selon l'une quelconque des revendications 1 et 2,
**caractérisé en ce qu'**il comprend en outre des casquettes annulaires interne (12) et externe (22) situées dans le prolongement vers l'amont des parois interne et externe de la chambre de combustion et portées par ladite couronne.

4. Ensemble selon l'une quelconque des revendications 1 à 3,
**caractérisé en ce que** chaque pièce de liaison (17, 27) a une première extrémité fixée au carter métallique interne ou externe et une deuxième extrémité fixée à un secteur de paroi interne ou de paroi externe de la chambre de combustion.

5. Ensemble selon la revendication 4, **caractérisé en ce que** chaque secteur (110, 120) de paroi interne ou de paroi externe de chambre de combustion porte au moins une patte (18, 28) sur laquelle est fixée la deuxième extrémité d'une pièce de liaison (17, 27).

6. Ensemble selon la revendication 5, **caractérisé en ce que** chaque patte (18, 28) d'un secteur (110, 120) de paroi interne ou externe de chambre de combustion est en matériau composite à matrice céramique et est intégrée au secteur à la fabrication de celui-ci.

7. Ensemble selon la revendication 6, **caractérisé en ce que** chaque patte (18, 28) comporte un renfort fibreux qui est dans la continuité d'un renfort fibreux du secteur (110, 120) de paroi interne ou externe auquel la patte est intégrée.

8. Ensemble selon la revendication 6, **caractérisé en ce que** chaque patte (18, 28) comporte un renfort fibreux qui est relié à un renfort fibreux du secteur (110, 120) de paroi interne ou externe auquel la patte est intégrée.

9. Ensemble selon l'une quelconque des revendications 1 à 8,
**caractérisé en ce qu'**un joint d'étanchéité (13) est interposé entre secteurs de chambre adjacents (100).

10. Ensemble selon la revendication 9, **caractérisé en ce que** le joint d'étanchéité (13) comporte une structure fibreuse en fibres réfractaires.

11. Ensemble selon la revendication 10, **caractérisé en ce que** la structure fibreuse du joint d'étanchéité (13) est au moins partiellement densifiée par une matrice céramique.

12. Ensemble selon l'une quelconque des revendications 1 à 11, **caractérisé en ce qu'**il comporte des lèvres d'étanchéité annulaires interne (19) et externe (29) fixées à la partie d'extrémité aval de la chambre du côté extérieur des parois interne (10) et externe (20) de la chambre.

13. Ensemble selon la revendication 12 et l'une quelconque des revendications 5 à 8 **caractérisé en ce que** les lèvres d'étanchéité (19, 29) sont fixées sur les pattes (18, 28) portées par les secteurs (110, 120) de paroi interne et de paroi externe de la chambre.

14. Ensemble de chambre de combustion selon l'une quelconque des revendications 1 à 13, **caractérisé en ce que** les secteurs (110, 120) de parois de chambre interne et externe se prolongent par des parties d'extrémité (112, 122) qui sont fixées sur les faces extérieures de parois interne (44) et externe (46) d'un distributeur de turbine (40) disposé en sortie de la chambre de combustion.

15. Moteur aéronautique à turbine à gaz muni d'un ensemble de chambre de combustion selon l'une quelconque des revendications 1 à 14.

## Patentansprüche

1. Ringförmige Brennkammeranordnung einer Gasturbine, umfassend: ein inneres Metallgehäuse (15), ein äußeres Metallgehäuse (25), eine ringförmige Brennkammer, die zwischen dem inneren und dem äußeren Gehäuse angebracht ist und eine ringförmige Innenwand (10) und eine ringförmige Außenwand (20) aus Keramikmaterial sowie einen Kammerboden (30) umfasst, der an die Innen- und die Außenwand angeschlossen ist und mit Öffnungen für die Aufnahme von Injektoren versehen ist, und elastisch verformbare Teile (17, 27), welche die Brennkammer zwischen dem inneren Metallgehäuse und dem äußeren Metallgehäuse tragen, wobei die Anordnung, die durch die Innenwand (10), die Außenwand (20) und den Boden (30) der Brennkammer gebildet ist, in Umfangsrichtung in benachbarte Kammersektoren (100) unterteilt ist, die jeweils einen Innenwandsektor (110), einen Außenwandsektor (120) und einen Kammerbodensektor (130), welcher die Innen- und Außenwandsektoren verbindet, umfassen,
**dadurch gekennzeichnet, dass** jeder Kammersektor (100) aus einem einzigen Teil aus Keramikmatrix-Verbundwerkstoff ausgebildet ist, dass elastisch verformbare Verbindungsteile (17, 27) das innere Metallgehäuse (15) und das äußere Metallgehäuse (25) mit jedem Innenwandsektor (110) der Brennkammer bzw. mit jedem Außenwandsektor (120) der Kammer verbinden und dass ferner ein einstückiger Kranz (32) vorgesehen ist, der mit den Kammerbodensektoren (130) in Kontakt ist und mit dem die Kammersektoren verbunden sind.

2. Anordnung nach Anspruch 1, **dadurch gekennzeichnet, dass** die Verbindung zwischen den Kammersektoren (100) und dem Kranz (32) mittels Injektorenschalen (34) hergestellt ist.

3. Anordnung nach einem der Ansprüche 1 und 2, **dadurch gekennzeichnet, dass** sie ferner innere (12) und äußere (22) ringförmige Schirme umfasst, die in der stromaufwärtigen Verlängerung der Innen- und der Außenwand der Brennkammer gelegen und durch den Kranz getragen sind.

4. Anordnung nach einem der Ansprüche 1 bis 3, **dadurch gekennzeichnet, dass** jedes Verbindungsteil (17, 27) ein erstes Ende, das an dem inneren oder äußeren Metallgehäuse befestigt ist, und ein zweites Ende, das an einem Innenwand- oder Außenwandsektor der Brennkammer befestigt ist, aufweist.

5. Anordnung nach Anspruch 4, **dadurch gekennzeichnet, dass** ein jeder Sektor (110, 120) der Innenwand oder Außenwand der Brennkammer wenigstens eine Lasche (18, 28) trägt, an der das zweite Ende eines Verbindungsteils (17, 27) befestigt ist.

6. Anordnung nach Anspruch 5, **dadurch gekennzeichnet, dass** jede Lasche (18, 28) eines Sektors (110, 120) der Innen- oder Außenwand der Brennkammer aus Keramikmatrix-Verbundwerkstoff besteht und bei der Herstellung des Sektors in diesen integriert wird.

7. Anordnung nach Anspruch 6, **dadurch gekennzeichnet, dass** jede Lasche (18, 28) eine Faserverstärkung umfasst, die eine Faserverstärkung des Sektors (110, 120) der Innen- oder Außenwand, in den die Lasche integriert ist, fortsetzt.

8. Anordnung nach Anspruch 6, **dadurch gekennzeichnet, dass** jede Lasche (18, 28) eine Faserverstärkung umfasst, die mit einer Faserverstärkung des Sektors (110, 120) der Innen- oder Außenwand, in den die Lasche integriert ist, verbunden ist.

9. Anordnung nach einem der Ansprüche 1 bis 8, **dadurch gekennzeichnet, dass** eine Dichtung (13) zwischen benachbarten Kammersektoren (100) eingefügt ist.

10. Anordnung nach Anspruch 9, **dadurch gekennzeichnet, dass** die Dichtung (13) eine Faserstruktur aus feuerfesten Fasern umfasst.

11. Anordnung nach Anspruch 10, **dadurch gekennzeichnet, dass** die Faserstruktur der Dichtung (13) wenigstens teilweise durch eine Keramikmatrix verdichtet ist.

12. Anordnung nach einem der Ansprüche 1 bis 11, **dadurch gekennzeichnet, dass** sie eine innere (19) und eine äußere (29) ringförmige Dichtungslippe umfasst, die an dem stromabwärtigen Endteil der Kammer auf der Außenseite der Innen- (10) und der Außenwand (20) der Kammer befestigt sind.

13. Anordnung nach Anspruch 12 und einem der Ansprüche 5 bis 8, **dadurch gekennzeichnet, dass** die Dichtungslippen (19, 29), an den Laschen (18, 28), die durch die Sektoren (110, 120) der Innenwand und Außenwand der Kammer getragen sind, befestigt sind.

14. Brennkammeranordnung nach einem der Ansprüche 1 bis 13, **dadurch gekennzeichnet, dass** die Sektoren (110, 120) der inneren und äußeren Kammerwand durch Endteile (112, 122) fortgesetzt sind, welche an den Außenseiten von Innen- (44) und Außenwand (46) eines Turbinenleitrades (40), welches am Ausgang der Brennkammer angeordnet ist, befestigt sind.

15. Gasturbinentriebwerk für die Luftfahrt, das mit einer Brennkammeranordnung nach einem der Ansprüche 1 bis 14 ausgestattet ist.

## Claims

1. An annular combustion chamber assembly for a gas turbine, the assembly comprising: an inner metal casing (15); an outer metal casing (25); an annular combustion chamber mounted between the inner and outer casings and comprising an annular inner wall (10) and an annular outer wall (20) of ceramic material together with a chamber end wall (30) connected to the inner and outer walls and provided with orifices for receiving injectors; and elastically-deformable link parts (17, 27) supporting the combustion chamber between the inner metal casing and the outer metal casing; the assembly formed by the inner wall (10), the outer wall (20), and the end wall (30) of the combustion chamber being subdivided circumferentially into adjacent chamber sectors (100), each comprising an inner wall sector (110), an outer wall sector (120), and a chamber end sector (130) interconnecting the outer and inner wall sectors;
the assembly being **characterized in that** each chamber sector (100) is made as a single piece of ceramic composite material, **in that** elastically-deformable link parts (17, 27) connect the inner metal casing (15) and the outer metal casing (25) respectively to each inner wall sector (110) of the combustion chamber and to each other wall sector (120) of the chamber, and **in that** a one-piece ring (32) is also provided in contact with the chamber end wall sectors (130) and to which the chamber sectors are connected.

2. An assembly according to claim 1, **characterized in that** the connection between the chamber sectors (100) and the ring (32) is made by means of injector bowls (34).

3. An assembly according to claim 1 or claim 2, **characterized in that** it further comprises inner and outer annular cowls (12, 22) extending the inner and outer walls of the combustion chamber upstream and carried by said ring.

4. An assembly according to any one of claims 1 to 3, **characterized in that** each link part (17, 27) has a first end fastened to the inner or outer metal casing and a second end fastened to an inner or outer wall sector of the combustion chamber.

5. An assembly according to claim 4, **characterized in that** each inner or outer combustion chamber wall sector (110, 120) carries at least one tab (18, 28) to which the second end of a link part (17, 27) is fastened.

6. An assembly according to claim 5, **characterized in that** each tab (18, 28) of an inner or outer combustion chamber wall sector (110, 120) is made of ceramic matrix composite material and is incorporated in the sector during fabrication thereof.

7. An assembly according to claim 6, **characterized in that** each tab (18, 28) comprises fiber reinforcement that extends fiber reinforcement of the inner or outer wall sector (110, 120) in which the tab is incorporated.

8. An assembly according to claim 6, **characterized in that** each tab (18, 28) comprises fiber reinforcement that is connected to fiber reinforcement of the inner or outer wall sector (110, 120) in which the tab is incorporated.

9. An assembly according to any one of claims 1 to 8, **characterized in that** a sealing gasket (13) is interposed between adjacent chamber sectors (100).

10. An assembly according to claim 9, **characterized in that** the sealing gasket (13) comprises a fiber structure made of refractory fibers.

11. An assembly according to claim 10, **characterized in that** the fiber structure of the sealing gasket (13) is densified at least in part by a ceramic matrix.

12. An assembly according to any one of claims 1 to 11, **characterized in that** it includes inner and outer annular sealing lips (19, 29) fastened to the downstream end portion of the chamber on the outsides of the inner and outer chamber walls (10, 20).

13. An assembly according to claim 12 and any one of claims 5 to 8, **characterized in that** the sealing lips (19, 29) are fastened to the tabs (18, 28) carried by the inner and outer wall sectors (110, 120) of the chamber.

14. A combustion chamber assembly according to any one of claims 1 to 13, **characterized in that** the inner and outer chamber wall sectors (110, 120) are extended by end portions (112, 122) that are fastened on the outer faces of the inner and outer walls (44, 46) of a turbine nozzle (40) disposed at the outlet from the combustion chamber.

15. A gas turbine aero-engine provided with a combustion chamber assembly according to any one of claims 1 to 14.
